(19) Europäisches Patentamt
European Patent Office
Office européen des brevets

(11) EP 3 101 409 A1

(12) **EUROPÄISCHE PATENTANMELDUNG**

(43) Veröffentlichungstag:
07.12.2016 Patentblatt 2016/49

(51) Int Cl.:
**G01N 9/00** *(2006.01)*

(21) Anmeldenummer: **16169826.1**

(22) Anmeldetag: **17.05.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **20.05.2015 AT 504092015**

(71) Anmelder: **Anton Paar GmbH**
**8054 Graz-Straßgang (AT)**

(72) Erfinder:
• **BELITSCH, Wolfgang**
**8075 Graz (AT)**
• **TRUMMER, Patrick**
**8075 Hart bei Graz (AT)**
• **BREIDLER, Robert**
**8020 Graz (AT)**

(74) Vertreter: **Wildhack & Jellinek**
**Patentanwälte**
**Landstraßer Hauptstraße 50**
**1030 Wien (AT)**

(54) **MESSGERÄT ZUR UNTERSUCHUNG VON FLUIDEN PROBEN**

(57) Die Erfindung betrifft ein Messgerät zur Untersuchung von fluiden Proben, umfassend einen Biegeschwinger (15), dessen Schwingerrohr (2) an zumindest einer Einspannstelle (5) festgelegt ist und auf der einen Seite der Einspannstelle (5), insbesondere Trägereinheit, einen frei auskragenden Schwingerabschnitt (16) ausbildet und auf der anderen Seite einen Fluidzufuhrrohrabschnitt (17) mit einer Zufuhröffnung und einen Fluidableitrohrabschnitt (18) mit einer Fluidableitöffnung besitzt. Erfindungsgemäß ist vorgesehen, dass das Schwingerrohr (2) sowohl an seinem Fluidableitrohrabschnitt (17) als auch an seinem Fluidzufuhrrohrabschnitt (18) mit zumindest einer zusätzlich zur Einspannstelle (5) vorgesehenen, eigenständigen Halteeinrichtung (7) festgelegt bzw. festgehalten ist.

Fig. 1

EP 3 101 409 A1

**Beschreibung**

Die Erfindung betrifft ein Messgerät zur Dichtebestimmung von Fluiden, insbesondere ein Messgerät gemäß dem Oberbegriff des Patentanspruchs 1.

Das Prinzip der Dichtemessung von flüssigen oder gasförmigen Fluiden mit Hilfe eines schwingenden Glasrohres, das mit dem zu messenden Fluid gefüllt ist, ist bekannt. Die Messung der Dichte von fluiden Medien mit einem Biegeschwinger beruht auf der Tatsache, dass die Schwingung eines mit einer zu untersuchenden Probe gefüllten Hohlkörpers von der Füllung des Schwingerrohrs abhängt, d.h. von der Masse bzw. wenn das Volumen konstant ist, von der Dichte des eingefüllten Mediums.

Die Messzelle eines Messgeräts enthält als schwingfähiges Gebilde ein hohles, in der Regel U-förmig gebogenes, gläsernes oder metallisches Schwingerrohr. Dieses wird auf elektronischem Weg zu einer Schwingung angeregt. Die beiden Schenkel des U-förmigen Rohrs bilden die Federelemente des Schwingers. Die Eigenfrequenz des U-förmigen Schwingerrohrs wird nur von jenem Teil der Probe beeinflusst, welcher an der Schwingung tatsächlich teilnimmt. Dieses an der Schwingung teilnehmende Volumen V ist durch die ruhenden Schwingungsknoten an den Einspannstellen des Schwingerrohrs begrenzt. Ist das Schwingerrohr mindestens bis zu diesen Einspannstellen mit der Probe gefüllt, nimmt immer dasselbe, genau definierte Volumen V an der Schwingung teil und die Masse der Probe kann daher proportional zu ihrer Dichte angenommen werden. Eine Überfüllung des Schwingers über die Einspannstellen hinaus ist für die Messung belanglos. Aus diesem Grund können mit dem Schwinger auch Dichten von Fluiden gemessen werden, die den Schwinger durchströmen.

Die Dichte der Flüssigkeit bestimmt also die spezifischen Frequenzen, in denen das U-förmige Rohr schwingt. Verwendet man Präzisions-Glasrohre oder -Metallrohre, so variieren deren Schwingungseigenschaften je nach Dichte und Viskosität der Flüssigkeit. Die Resonanz-Frequenzen werden durch geeignete Anregung und Abnahme der Schwingungen ausgewertet und aus der Periodendauer wird die Dichte der eingefüllten fluiden Probe bestimmt. Der Schwinger wird mit Fluiden bekannter Dichte justiert und so sind die Messungen auswertbar.

Für die Periodendauer P und die Dichte $\rho$ gilt allgemein:

$$\rho = P^2 \frac{R}{4\pi^2 V} - \frac{m}{V} = A\,P^2 - B$$

Derartige Dichteschwinger bzw. Biegeschwinger werden in unterschiedlichsten Ausführungsformen hinsichtlich Anregung und Abnahme der Schwingung erstellt. Die Anregung und Abnahme der sich ergebenden Eigenschwingungen erfolgt z.B. mittels Magnetspulen und Magneten, piezoelektrischen Elementen, kapazitiver Abtastung, usw. Je nach Art der angeregten Schwingung unterscheidet man verschiedene Formen von Biegeschwingern.

Y-Schwinger bestehen aus einem U-förmig gebogenen Rohr mit parallelen Schenkeln und schwingen senkrecht zu der durch die beiden Schenkel des Schwingers gebildeten Ebene. Hier ist eine relativ große Gegenmasse erforderlich, um sicherzustellen, dass die Schwingung rein durch das Federmasse-System bestehend aus U-Rohr und Probe bestimmt wird.

Sogenannte X-Schwinger, bei denen die Schenkel des U-Rohres symmetrisch gegeneinander schwingen, benötigen keine Gegenmasse, da sich hier Fehlereinflüsse durch das symmetrische Schwingungsbild wegheben. Hier sind einerseits Schwinger mit zwei Schenkeln mit einer Umlenkung ähnlich einem U-Rohr bekannt, aber andererseits auch sogenannte Doppelbugschwinger, bei denen zwei parallele U-Rohre gegeneinander schwingen.

Prinzipiell können derartige Schwinger aus Metall und Glas gefertigt werden. Bevorzugt sind dabei jedoch Glasschwinger aufgrund ihrer hohen Resistenz gegen aggressive Medien, z.B. Lösungsmittel, Säuren, Basen etc. Gleichzeitig kann in derartigen Glasschwingern auch die Füllung optisch mit freiem Auge und/oder einer Kamera kontrolliert und/oder detektiert werden.

Im Regelfall sind derartige Schwinger noch von einem Glasgehäuse umgeben und als Messzelle ausgebildet, welches Gehäuse den Schwinger vor Umgebungseinflüssen schützt. Um guten thermischen Kontakt mit einer Temperiereinheit herzustellen, werden diese Messzellen beispielsweise mit Wasserstoff gefüllt.

Das Glasrohr wird üblicherweise mittels einer Spritze oder einer automatischen Probenfülleinheit mit dem zu messenden Fluid befüllt oder durchströmt, wobei das Fluid mit der Spritze in das Glasrohr an einer Einströmöffnung über eine Kunststofftülle eingebracht wird, durch den Schwinger läuft und an der Ausströmöffnung wiederum über eine Kunststofftülle ausläuft. Die Kunststofftüllen werden dabei entweder an dem Schwingergehäuse oder dem Träger des Gehäuses befestigt, dies erfolgt beispielsweise durch Schrauben oder Klemmen der Tüllen. Die Tüllen werden dabei selbstverständlich so angebracht, dass sie nicht in das zur Messung beitragende Volumen des Schwingers ragen. Bevorzugte Tüllenmaterialien sind beständige Kunststoffe wie beispielsweise PTFE (Polytetrafluoroethylen), FEP (Perfluorethylenpropylen).

Da der Übergang zwischen Kunststofftülle und Glasrohr luftdicht sein muss, werden die Kunststofftüllen mit relativ großer Kraft gegen das Glasrohr gedrückt, was zu mechanischen Verspannungen im Glasrohr führt. Es konnte nachgewiesen werden, dass diese Verspannungen die Resonanzfrequenz des Glasrohres beeinflussen und sich damit negativ auf die Genauigkeit der Dichtemessung auswirken, vor allem wenn eine große Spritze (z.B. 10ml) direkt an die Kunststofftüllen angesteckt oder die Temperatur der Messzelle verändert wird, da jede kleinste Längenänderung im Schwinger nach Art einer verspannten Feder zu einer Änderung der Eigenfrequenz führt.

Die genaue Untersuchung von Schwingern während der Messung zeigt, dass das Einsetzen der Tüllen bereits zu unterschiedlichen Belastungen führt und stark bedienerabhängig ist. Aufnahmen des Schwingers unter polarisiertem Licht zeigen, dass die Glasstege, die den Schwinger tragen bzw. mit dem umgebenden Gerätegehäuse und damit auch mit der Gegenmasse verbinden, durch den Druck der Anschlusstüllen nicht gleichmäßig belastet werden, was zu mechanischen Spannungen im Glaskörper im Verbindungsbereich zwischen Schwinger und Gehäuse führt. Diese Spannung haben direkten Einfluss auf die Eigenfrequenz des Schwingers und führen zu Ungenauigkeiten im Schwingverhalten.

Bei einer Veränderung der Messtemperatur führt die Änderung der Verspannung im Glas aufgrund der sich verändernden Anpresskraft durch die Tüllen zu Ungenauigkeiten in der Eigenfrequenz bzw. Dämpfung und damit auch zu Fehlern in der gemessenen Dichte bzw. Viskositätskorrektur. Mitunter kann es sogar notwendig sein, dass das Gerät durch Messung von Standards neu justiert werden muss.

Dies gilt auch für die für eine temperaturabhängige Messung nötige Temperierung des Schwingers. Auch hier führen diese Verspannungen zu einer langsameren Angleichung der stabilen Messwerte und auch durch die Hysterese des Glases beim Durchlaufen von Temperaturkurvenrampen führt zu Ungenauigkeiten in der Eigenfrequenz bzw. Dämpfung und damit auch in der ermittelten Dichte bzw. Viskositätskorrektur.

Im schlimmsten Fall muss der Schwinger daher, insbesondere für hochgenaue Messungen bis in die 6. Nachkommastelle, also +- 10 E - 6 g/cm$^3$, nach dem Durchlaufen von Temperaturkurven durch Messung mit Standards neu justiert werden.

Diese Effekte infolge mechanischer Spannungen im Glas waren bisher völlig unbekannt und wurden durch hochgenaue Polarisationsaufnahmen des Schwingers während der Versuchsdurchführung durch Messungen zur Wiederholbarkeit nachgewiesen.

Um diese Verspannungen zu verringern, könnten beispielsweise der Schwinger stabiler am Gehäuse befestigt oder die Schwingerrohre im Füllbereich verstärkt werden. Dies ist jedoch durch das Abkühlverhalten der Gläser limitiert, weil die Schwinger aufgrund der auftretenden Spannungen beim Abkühlen brechen können.

Erfindungsgemäß ist ein Messgerät der eingangs genannten Art dadurch gekennzeichnet, dass das Schwingerrohr sowohl an seinem Fluidableitrohrabschnitt als auch an seinem Fluidzufuhrrohrabschnitt mit zumindest einer zusätzlich zur Einspannstelle vorgesehenen, eigenständigen Halteeinrichtung festgelegt bzw. festgehalten ist. Insbesondere kann durch einen zusätzlichen Haltesteg der Biegeschwinger von der Anschluss- bzw. Einspannstelle mechanisch entkoppelt werden und damit können sowohl der Biegeschwinger als auch ein Referenzschwinger vor zu hohen Verspannungen geschützt werden. Damit wird das vorrangige Ziel der Erfindung erreicht, den Anschlusseffekt von Tüllen bei einem Glasschwinger zu minimieren bzw. zu unterdrücken und damit die Genauigkeit der Messung zu verbessern. Ferner wird das Problem des Verhaltens der Messzelle aufgrund auftretender Verspannungen nach einer Temperaturänderung der Messzelle gelöst.

Als Einspannstelle können alle bekannten Einrichtungen für das Einspannen und Haltern von Schwingerrohren eingesetzt werden.

Die Erfindung sieht somit eine zusätzliche Versteifung an einer bestimmten Stelle des Schwingerrohrs vor. Diese Versteifung hat die Aufgabe, die über die Tülle von einer Zufuhreinheit, insbesondere einer Spritze, auf das Schwingerrohr eingebrachten Kräfte aufzunehmen und, vorzugsweise an das Messgerätgehäuse, abzuleiten. Es wird bemerkt, dass die Versteifung nicht ident mit einem allfällig vorgesehenen Steg ist, welcher einen Referenzschwinger trägt. Die Versteifung bzw. der Haltesteg kann auch als Verbindungssteg zwischen den Abschnitten des Schwingerrohrs im Zufuhr- bzw. Ableitbereich dienen. Die genaue Position und Ausrichtung, d.h. ein gerader oder schräger Verlauf zum Schwingerrohr, der Versteifung bzw. Halteeinrichtung kann variieren. Die Versteifung befindet sich prinzipiell jedoch im Bereich zwischen dem Tüllenanschluss und der Einspannstelle des Schwingerrohrs.

Es ist prinzipiell möglich, dass der Referenzschwinger nicht direkt an dem das Schwingerrohr tragenden Steg oder an diesem Steg, aber nicht zu nahe dem Gehäuse, angebunden wird. Durch das Einpressen der Tüllen in den Körper des Referenzschwingers werden aber auch an diesen das Schwingerrohr bzw. den Referenzschwinger tragenden Stegen mechanische Spannungen erzeugt, die sich negativ auf das Schwingungsverhalten des Referenzschwingers auswirken. Mit der erfindungsgemäß vorgesehenen Halteeinrichtung werden jedoch auch derartige Verspannungen minimiert.

Geeignet als Halteeinrichtung ist jede, vorzugsweise biegesteife, Verbindung zwischen einem Hüllrohr bzw. Gehäuse des Biegeschwingers bzw. Messgerätgehäuse und den beiden Fluidanschlussabschnitten des Schwingerrohrs.

Alles, was tüllenseitig von der Einspannstelle bzw. vom Einspannsteg des Schwingerrohrs liegt, ist in Bezug auf den Schwinger als unendlich steif zu betrachten; dort auftretende Verspannungen werden erfindungsgemäß minimiert.

Besonders vorteilhaft ist die Erfindung, wenn zusätzlich zum Biegeschwinger ein Referenzschwinger vorgesehen ist, da dieser von der vorgesehenen Versteifung des Schwingerrohrs des Biegeschwingers durch die Halteeinrichtung profitiert und ebenfalls exakter betrieben werden kann. Es ist möglich, den Referenzschwinger an einem Glasrahmen des Messgeräts festzumachen oder am Schwingerrohr oder an dem dieses tragenden Träger bzw. Steg anzuordnen.

Der Referenzschwinger kann von einem U-Rohr oder einem simplen Glasstab gebildet sein, um insbesondere das Alterungsverhalten und die thermische Hysterese des verwendeten Glases zu korrigieren. In jedem Fall können die unerwünschten Auswirkungen des Anschlusses von Tüllen ausgeschaltet werden.

In bevorzugten Fällen kann der Referenzschwinger mit dem gleichen Erregersystem zur Schwingung angeregt werden, wie der Messschwinger bzw. das Schwingerrohr. Dies ermöglicht eine einfachere Fertigung mit weniger Teilen.

Ein konstruktiv einfacher Aufbau des Messgeräts ergibt sich, wenn die Halteeinrichtung von zumindest einem am Gehäuse und/oder Gestell des Messgeräts und am Fluidzufuhrrohrabschnitt und/oder am Fluidableitrohrabschnitt befestigten Haltesteg oder Halterohr gebildet ist.

Wenn vorgesehen ist, dass das Schwingerrohr an zwei Einspannstellen, insbesondere Trägereinheiten, festgelegt und gegebenenfalls dazwischen mit einer Schwingungsanregereinheit verbunden ist, ist es von Vorteil, wenn die Halteeinrichtung außerhalb des von den Einspannstellen begrenzten Abschnitts des Schwingerrohrs mit dem Fluidzufuhrrohrabschnitt und Fluidableitrohrabschnitt des Schwingerrohrs verbunden ist.

Für die Praxis ist es von Vorteil, wenn das Schwingerrohr in seinem Verlauf zwischen seinen beiden Einspannstellen einen Referenzbiegeschwinger bzw. die, vorzugsweise von Trägern gebildeten, Einspannstellen des Referenzschwingers trägt.

Ein stabiler Aufbau und eine gute Halterung bzw. Schwingungsdämpfung und Vermeidung von Spannungen ist dann erreicht, wenn die Halteeinrichtung bzw. der Haltesteg bzw. das Halterohr beidseits des Schwingerrohrs an bezüglich des Schwingerrohrs einander gegenüberliegenden Stellen mit dem Gehäuse und/oder Gestell des Messgeräts verbunden ist und/oder wenn die Halteeinrichtung bzw. der Haltesteg das Schwingerrohr im Bereich des Fluidzufuhrrohrabschnitts und des Fluidableitrohrabschnitts, vorteilhafterweise allseitig bzw. über diesen gesamten Umfang, umgibt bzw. diese beiden Abschnitte durch den Haltesteg durchgeführt und mit diesen verbunden lageinvariant festgelegt sind.

Von besonderem Vorteil ist die Erfindung, wenn vorgesehen ist, dass an den Fluidzufuhrrohrabschnitt und an den Fluidableitrohrabschnitt bzw. fluidzufuhrseitig und fluidableitseitig der Einspannstelle am Schwingerrohr Tüllen zum Anschluss einer Fluidzu- und -ableitung angeschlossen sind und/oder dass das Schwingerrohr und/oder die Halteeinrichtung bzw. der Haltesteg und/oder ein die Einspannstelle ausbildenden Träger aus Glas bestehen.

Bei einer bevorzugten Ausführungsform ist vorgesehen, dass die an den Fluidzufuhrrohrabschnitt und Fluidableitrohrabschnitt des Schwingerrohrs angeschlossen Tüllen mit einem Halter mit dem Gehäuse und/oder Gestell verbunden sind.

Es ist durchaus möglich, dass die Halteeinrichtung einen Haltesteg für den Fluidzufuhrrohrabschnitt und einen Haltesteg für den Fluidableitrohrabschnitt umfasst, die den jeweiligen Rohrabschnitt mit dem Gehäuse und/oder dem Gestell verbindet und bewegungsinvariant festlegen.

Im Folgenden wird die Erfindung anhand der Zeichnungen beispielsweise näher erläutert.

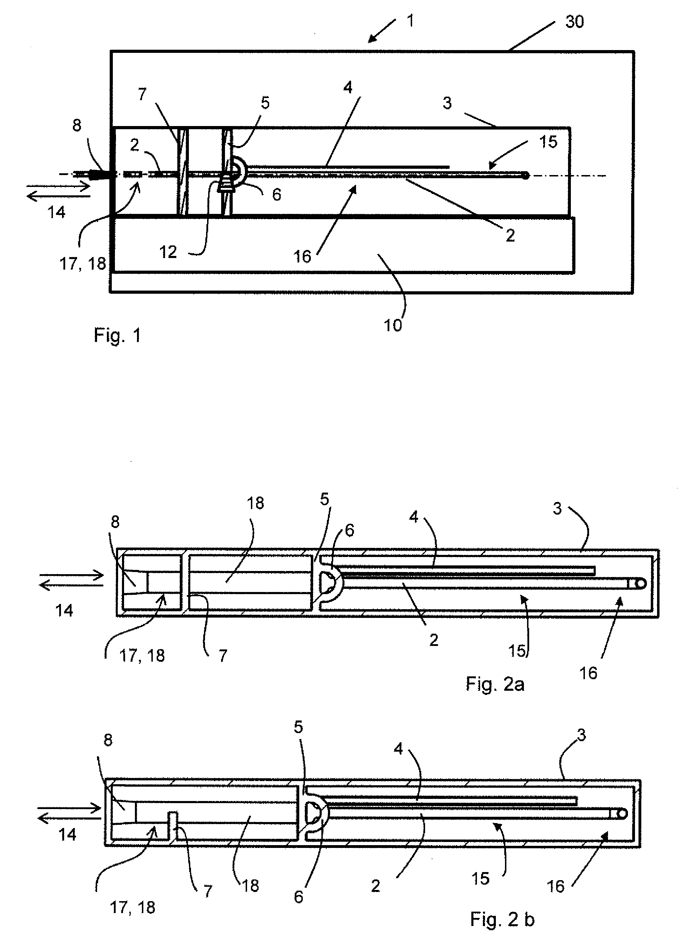

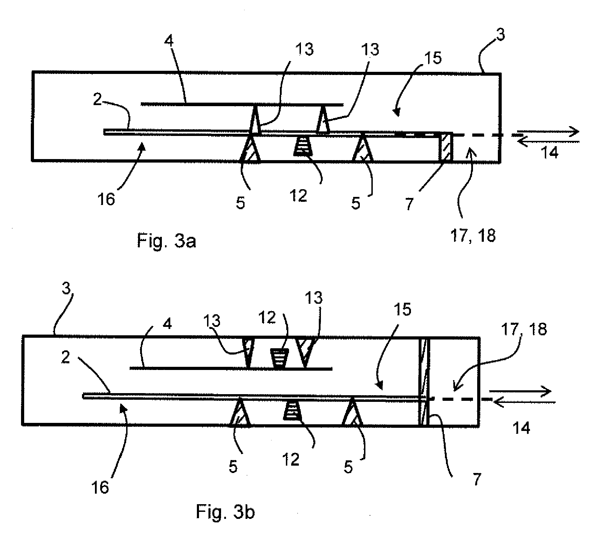

Fig. 1 zeigt ein erfindungsgemäßes Messgerät in einem schematischen Schnitt. Fig. 2a und 2b zeigen zwei unterschiedliche Ausführungsformen von Messsonden in einem schematischen Schnitt. Fig. 3a und 3b zeigen einige schematische Ausführungsformen von erfindungsgemäßen Messgeräten.

Fig. 1 zeigt ein Messgerät 1, das innerhalb einer Temperierkammer 30 angeordnet ist und ein Messgerätgehäuse 3 umfasst, das auf einem Gestell 10 angeordnet ist, welches Gestell 10 auch als Gegenmasse bzw. zur Temperierung des Sensorgehäuses dient. Auf dem Gestell 10 bzw. innerhalb des Messgerätgehäuses 3 bzw. mit diesem verbunden befindet sich ein Träger, der die Einspannstelle 5 für das Schwingerrohr 2 eines Biegeschwingers ausbildet. Das in der Einspannstelle 5 festgelegte Schwingerrohr 2 kann in seinem frei auskragenden Schwingerabschnitt 16 mit einer Schwingungsanregungseinheit 12 zu Schwingungen angeregt werden. Die Einspannstelle 12 des Schwingerrohrs 2 des Biegeschwingers 15 hält diesen fest, wobei sich an der dem Schwingerabschnitt 16 gegenüberliegenden Seite der Einspannstelle 12 die Abschnitte des Schwingerrohrs 2 befinden, die zur Fluidzufuhr bzw. Fluidabfuhr in das bzw. aus dem Schwingerrohr 2 dienen. Dieser Fluidzufuhrrohrabschnitt 17 und Fluidableitrohrabschnitt 18 sind mit einer zusätzlich zur Einspannstelle 5 vorgesehenen Halteeinrichtung 7 im vorliegenden Fall einen Steg festgelegt bzw. schwingungsinvariant gehalten. Die Halteeinrichtung 7 ist mit dem Messgerätgehäuse 3 und/oder mit dem Gestell 10 verbunden. An den Fluidzufuhrrohrabschnitt 17 und den Fluidableitrohrabschnitt 18 sind Tüllen 8 angeschlossen, mit denen das zu untersuchende Fluid gemäß den Pfeilen 14 dem Biegeschwinger 15 zugeführt bzw. von diesem abgeleitet werden kann.

Die Tüllen 8 werden an das Schwingerrohr 2, vorzugsweise fluiddicht, angesetzt bzw. an diesem befestigt und mit diesem fluiddicht verbunden.

Die Halteeinrichtung 7 kann in Form eines runden oder eckigen oder anderes Profil aufweisenden Stegs ausgebildet sein; die Halteeinrichtung 7 kann auch von einem Rohr gebildet sein.

Der die Einspannstelle 5 ausbildende Träger kann auch einen Träger 6 tragen, von dem ein Referenzbiegeschwinger 4 getragen ist.

Fig. 2a und 2b zeigen einen der Praxis angenäherten Biegeschwinger im Schnitt. Der gebogene Träger 6 trägt den Referenzschwinger 4 und geht vom Träger der Einspannstelle 5 des Schwingerrohrs 2 des Biegeschwingers 15 ab.

Wie aus Fig. 1 ersichtlich ist, erfolgt die Schwingungsanregung mit einer schematisch dargestellten Schwingungsanregereinheit 12 im Bereich vor der Einspannstelle 5 in dem frei ausragenden Schwingerabschnitt 16.

Aus den Fig. 2a und 2b ist zu erkennen, dass bei dieser Ausführungsform die Halteeinrichtung 7 von einem Steg gebildet ist, der den gegenüber dem frei auskragenden Schwingerabschnitt 16 vergrößerten Durchmesser besitzenden Fluidableitrohrabschnitt 18 des Schwingerrohrs 2 mit dem Gehäuse 3 verbindet. Der Fluidzufuhrrohrabschnitt 17 wird auf die gleiche Weise festgelegt.

Wenn das Schwingerrohr 2 an zwei Einspannstellen 5 festgelegt ist, wie dies in den Fig. 3a und 3b dargestellt ist, kann die Schwingungsanregereinheit 12 zwischen den beiden Einspannstellen 5 liegen. Die Einspannstellen 13 eines direkt auf das Schwingerrohr 2 des Biegeschwingers 15 aufgesetzten Referenzschwingers 4 liegen zwischen den beiden Einspannstellen 5 des Schwingerrohrs 2. Im Fluidzufuhrrohrabschnitt 17 und im Fluidableitrohrabschnitt 18 wird das Schwingerrohr 2 mit der Halteeinrichtung 7 festgelegt, die sich gemäß Fig. 3 von der Wand des Messgerätgehäuses bis zum Schwingerrohr 2 erstreckt.

Bei der Ausführungsform gemäß Fig. 3b liegen die beiden Einspannstellen 13 des Referenzschwingers 4 an der Wand des Gehäuses 3.

Wie aus Fig. 2a ersichtlich ist, können der Fluidzufuhrrohrabschnitt 17 und der Fluidableitrohrabschnitt 18 durch den Haltesteg der Halteeinrichtung 7 durchgeführt und auf diese Weise festgehalten werden.

Vor allem ist der Einsatz der Erfindung von Vorteil, wenn das Schwingerrohr 2 und die Halteeinrichtung 7 aus Glas ausgebildet sind, da hier ein Angriff von aggressiven Medien entfällt.

Letztlich ist es auch noch möglich, die Tüllen 8 mit dem Gehäuse 3 des Messgeräts 1 zu verbinden, um die Tüllen 8 für die Messung weitgehend bewegungsinvariant zu lagern.

**Patentansprüche**

1. Messgerät zur Untersuchung von fluiden Proben, umfassend einen Biegeschwinger (15), dessen Schwingerrohr (2) an zumindest einer Einspannstelle (5) festgelegt ist und auf der einen Seite der Einspannstelle (5), insbesondere Trägereinheit, einen frei auskragenden Schwingerabschnitt (16) ausbildet und auf der anderen Seite einen Fluidzufuhrrohrabschnitt (17) mit einer Zufuhröffnung und einen Fluidableitrohrabschnitt (18) mit einer Fluidableitöffnung besitzt, **dadurch gekennzeichnet, dass** das Schwingerrohr (2) sowohl an seinem Fluidableitrohrabschnitt (17) als auch an seinem Fluidzufuhrrohrabschnitt (18) mit zumindest einer zusätzlich zur Einspannstelle (5) vorgesehenen, eigenständigen Halteeinrichtung (7) festgelegt bzw. festgehalten ist.

2. Messgerät nach Anspruch 1, **dadurch gekennzeichnet, dass** die Halteeinrichtung (7) von zumindest einem am Gehäuse (3) und/oder Gestell (10) des Messgeräts (1) und am Fluidzufuhrrohrabschnitt (17) und/oder am Fluidableitrohrabschnitt (18) befestigten Haltesteg oder Halterohr gebildet ist.

3. Messgerät nach Anspruch 1 oder 2, **dadurch gekennzeichnet,**

   - **dass** das Schwingerrohr (2) mit zwei Einspannstellen (5), insbesondere Trägereinheiten, festgelegt und gegebenenfalls dazwischen mit einer Schwingungsanregereinheit (12) verbunden ist, und
   - **dass** die Halteeinrichtung (7) außerhalb des von den Einspannstellen (5) begrenzten Abschnitts des Schwingerrohrs (2) mit dem Fluidzufuhrrohrabschnitt (17) und Fluidableitrohrabschnitt (18) des Schwingerrohrs (2) verbunden ist.

4. Messgerät nach einem der Ansprüche 1 bis 3, **dadurch gekennzeichnet, dass** das Schwingerrohr (2) in seinem Verlauf zwischen seinen beiden Einspannstellen (5) einen Referenzbiegeschwinger (4) bzw. die, vorzugsweise von Trägern gebildeten, Einspannstellen (13) des Referenzschwingers (4) trägt.

5. Messgerät nach einem der Ansprüche 1 bis 4, **dadurch gekennzeichnet, dass** die Halteeinrichtung (7) bzw. der Haltesteg bzw. das Halterohr beitseits des Schwingerrohrs (2) an bezüglich des Schwingerrohrs einander gegenüberliegenden Stellen mit dem Gehäuse (3) und/oder Gestell (10) des Messgeräts (1) verbunden ist.

6. Messgerät nach einem der Ansprüche 1 bis 5, **dadurch gekennzeichnet, dass** an den Fluidzufuhrrohrabschnitt (17) und an den Fluidableitrohrabschnitt (18) bzw. fluidzufuhrseitig und fluidableitseitig der Einspannstelle (5) am Schwingerrohr (2) Tüllen (8) zum Anschluss einer Fluidzu- und -ableitung angeschlossen sind.

7. Messgerät nach einem der Ansprüche 1 bis 6, **dadurch gekennzeichnet, dass** die Halteeinrichtung (7) bzw. der Haltesteg das Schwingerrohr (2) im Bereich des Fluidzufuhrrohrabschnitts (17) und des Fluidableitrohrabschnitts (18), vorteilhafterweise allseitig bzw. über diesen gesamten Umfang, umgibt bzw. diese beiden Abschnitte (17, 18) durch den Haltesteg durchgeführt und mit diesen verbunden lageinvariant festgelegt sind.

8. Messgerät nach einem der Ansprüche 1 bis 7, **dadurch gekennzeichnet, dass** das Schwingerrohr (2) und/oder die Halteeinrichtung (7) bzw. der Haltesteg und/oder ein die Einspannstelle (5) ausbildenden Träger aus Glas bestehen.

9. Messgerät nach einem der Ansprüche 1 bis 8, **dadurch gekennzeichnet, dass** die an den Fluidzufuhrrohrabschnitt (17) und Fluidableitrohrabschnitt (18) des Schwingerrohrs (2) angeschlossen Tüllen (8) mit einem Halter mit dem Gehäuse (3) und/oder Gestell (10) verbunden sind.

10. Messgerät nach einem der Ansprüche 1 bis 9, **dadurch gekennzeichnet, dass** die Halteeinrichtung (7) einen Haltesteg für den Fluidzufuhrrohrabschnitt (17) und einen Haltesteg für den Fluidableitrohrabschnitt (18) umfasst, die den jeweiligen Rohrabschnitt (17, 18) mit dem Gehäuse (3) und/oder dem Gestell (10) verbindet und bewegungsinvariant festlegen.

Fig. 1

Fig. 2a

Fig. 2 b

Fig. 3a

Fig. 3b

**Europäisches Patentamt**
**European Patent Office**
**Office européen des brevets**

# EUROPÄISCHER RECHERCHENBERICHT

Nummer der Anmeldung

EP 16 16 9826

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2009 031471 A1 (METTLER TOLEDO AG [CH]) 5. Januar 2011 (2011-01-05) | 1,2,5-10 | INV. G01N9/00 |
| A | * Absatz [0021] - Absatz [0030]; Abbildungen 1-4 * | 3,4 | |
| | ----- | | |
| X | CN 103 424 336 A (BEIJING AOPU KEXING TECHNOLOGY CO LTD) 4. Dezember 2013 (2013-12-04) * Abbildung 1 * | 1 | |
| | ----- | | |

RECHERCHIERTE SACHGEBIETE (IPC)

G01N

Der vorliegende Recherchenbericht wurde für alle Patentansprüche erstellt

| Recherchenort | Abschlußdatum der Recherche | Prüfer |
|---|---|---|
| Den Haag | 25. Oktober 2016 | Mauritz, Jakob |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 16 9826

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2016

| Im Recherchenbericht angeführtes Patentdokument | Datum der Veröffentlichung | Mitglied(er) der Patentfamilie | Datum der Veröffentlichung |
|---|---|---|---|
| DE 102009031471 A1 | 05-01-2011 | DE 102009031471 A1<br>US 2011000321 A1 | 05-01-2011<br>06-01-2011 |
| CN 103424336 A | 04-12-2013 | KEINE | |

Für nähere Einzelheiten zu diesem Anhang : siehe Amtsblatt des Europäischen Patentamts, Nr.12/82

EPO FORM P0461